# FASCICULE DE BREVET EUROPEEN

(11) **EP 2 331 350 B1**
(45) Date de publication et mention de la délivrance du brevet: **22.02.2012**
(21) Numéro de dépôt: 09811114.9
(22) Date de dépôt: 01.09.2009
(51) Int. Cl.: B60C 9/20

(54) **PNEUMATIQUE POUR VEHICULES LOURDS COMPORTANT AU MOINS DANS CHAQUE EPAULE AU MOINS DEUX COUCHES ADDITIONNELLES DANS L'ARMATURE DE SOMMET**
REIFEN FÜR SCHWERLASTFAHRZEUGE MIT MINDESTENS ZWEI ZUSÄTZLICHEN LAGEN IN DER GÜRTELVERSTÄRKUNG AN MINDESTENS JEDER SCHULTER
TYRE FOR HEAVY VEHICLES COMPRISING, AT LEAST IN EACH SHOULDER, AT LEAST TWO ADDITIONAL LAYERS IN THE CROWN REINFORCEMENT

(30) Priorité: 02.09.2008 FR 0855889
(43) Date de publication de la demande: 15.06.2011
(73) Titulaire: Société de Technologie MICHELIN, 63000 Clermont-Ferrand (FR); MICHELIN Recherche et Technique S.A., 1763 Granges-Paccot (CH)
(72) Inventeur: COGNE, Michael, F-63200 Riom (FR)
(74) Mandataire: Le Cam, Stéphane Georges Elie
(86) Numéro de dépôt international: PCT/EP2009/061291
(87) Numéro de publication internationale: WO 2010/026141

(56) Documents cités:
- WO-A-2005/016668
- FR-A- 2 887 813
- JP-A- 9 226 320
- JP-A- 10 217 353
- JP-A- 11 227 414
- US-A- 5 373 886
- US-A- 5 837 077

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-fmis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une couche de travail ; lorsque ladite armature de sommet comporte au moins deux couches de travail, celles-ci sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet s'en trouve pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés des pneumatiques ainsi construits ont fait apparaître des ruptures de fatigue des câbles de la nappe additionnelle et plus particulièrement des bords de ladite nappe, que la nappe dite de triangulation soit présente ou non.

Pour remédier à de tels inconvénients et améliorer l'endurance de l'armature de sommet de ces pneumatiques, la demande française WO 99/24269 propose, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Des pneumatiques comprenant des bandes enroulées circonférentiellement au niveau du sommet sont divulgués dans les documents JP-A-09 226 320 et JP-A-11 227 414.

Un but de l'invention est de fournir des pneumatiques pour véhicules « Poids-Lourds » dont les performances d'endurance sont encore améliorées par rapport aux pneumatiques usuels.

Ce but est atteint selon l'invention par un pneumatique à armature de carcasse radiale comprenant une armature de sommet formée d'au moins deux couches de sommet de travail d'éléments de renforcement inextensibles, croisés d'une nappe à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, ledit pneumatique comprenant additionnellement dans chaque épaule au moins deux couches formées par enroulement circonférentielle d'une bande complexe formée de deux couches constituées d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue, ladite bande complexe additionnelle étant radialement adjacente au bord d'une couche de sommet de travail, et l'extrémité axialement extérieure de ladite bande complexe additionnelle étant située à une distance du plan équatorial du pneumatique au moins égale à la distance séparant dudit plan l'extrémité de la couche de travail à laquelle elle est adjacente.

Les largeurs axiales des couches d'éléments de renforcement ou positions axiales des extrémités desdites couches sont mesurées sur une coupe transversale d'un pneumatique, le pneumatique étant donc dans un état non gonflé.

Les essais réalisés avec des pneumatiques ainsi définis selon l'invention ont mis en évidence que les performances en terme d'endurance du pneumatique sont améliorées par rapport à des pneumatiques de conception plus traditionnelles ne comportant pas les couches additionnelles telles que décrites selon l'invention. Une interprétation de ces résultats peut être de constater que la bande complexe additionnelle, et plus exactement les éléments de renforcement de la bande complexe additionnelle, permet de limiter la propagation d'éventuelles amorces de fissures à l'extrémité de la couche de travail à laquelle elle est adjacente. Une telle action peut éventuellement être la conséquence d'un renforcement des masses caoutchouteuses de calandrage entre les éléments de renforcement de ladite couche de travail par les éléments de renforcement de la bande complexe additionnelle.

Le pneumatique ainsi réalisé selon l'invention et plus spécifiquement la bande complexe comporte en outre des couches d'éléments de renforcement parallèles dans une couche et croisés d'une couche à l'autre qui ne présentent pas d'extrémité sur leurs bords et dont la mise en oeuvre est relativement rapide ; en effet, deux couches sont réalisées simultanément par enroulement circonférentiel d'un élément préfabriqué que constitue la bande complexe. L'enroulement circonférentiel est en effet une technique relativement simple de mise en oeuvre et qui peut être effectuée avec une vitesse rapide ; en outre, comme rappelé précédemment, au moins deux couches sont réalisées simultanément.

L'absence d'extrémités libres des couches de la bande complexe permet de ne pas venir recréer d'éventuelles sources de perturbation des mélanges polymériques ou de défauts liés à la coupe des tissus constitutifs des couches de l'armature de sommet.

Un enroulement circonférentiel correspond à un enroulement de la bande complexe de sorte que les spires formées présentent un angle avec la direction circonférentielle inférieur à 8°.

Selon l'invention, la distance radiale entre les éléments de renforcement respectifs de chacune des couches de sommet formant une bande complexe est inférieure à l'épaisseur d'une couche de sommet et de préférence inférieure à la moitié de l'épaisseur d'une couche de sommet.

Au sens de l'invention, la distance radiale entre les éléments de renforcement respectifs de chacune des couches de sommet est mesurée radialement entre les génératrices respectivement supérieure et inférieure desdits éléments de renforcement des couches de sommet radialement intérieure et radialement extérieure. L'épaisseur de la couche de sommet est également mesurée selon la direction radiale.

De préférence encore, chacune des couches étant formées d'éléments de renforcement entre deux calandrages de mélanges polymérique formant chacun une épaisseur respectivement radialement à l'extérieur et radialement à l'intérieur desdits éléments de renforcement, la distance radiale entre les éléments de renforcement respectifs de chacune des couches de sommet est sensiblement équivalente à la somme de l'épaisseur de mélange polymérique du calandrage radialement à l'extérieur des éléments de renforcement de la couche de sommet radialement intérieure et de l'épaisseur de mélange polymérique du calandrage radialement à l'intérieur des éléments de renforcement de la couche de sommet radialement extérieure.

La bande complexe peut être préalablement obtenue selon un procédé consistant à écraser un tube, lui-même formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. La largeur de la bandelette est ajustée en fonction de l'angle avec lequel les spires sont enroulées, de manière à rendre les spires jointives.

Lors de l'écrasement dudit tube, les spires étant parfaitement jointives, la bande complexe obtenue est constituée de deux couches d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue. La réalisation d'un tube avec des spires jointives permet d'obtenir des éléments de renforcement linéaires dans chacune des couches, exception faite des extrémités axiales de chacune des couches, au niveau desquelles les éléments de renforcement forment des boucles pour assurer la continuité d'une couche à l'autre.

Cette linéarité des éléments de renforcement dans chacune des couches permet de conférer des rigidités longitudinale et de cisaillement constantes sur la largeur des dites couches formant la bande complexe.

L'écrasement dudit tube permet également d'obtenir un couplage des couches de sorte que la distance radiale entre les éléments de renforcement respectifs de chacune des couches est sensiblement équivalente à la somme de l'épaisseur de mélange polymérique du calandrage radialement à l'extérieur des éléments de renforcement de la couche radialement intérieure et de l'épaisseur de mélange polymérique du calandrage radialement à l'intérieur des éléments de renforcement de la couche radialement extérieure, lesdits calandrages venant au contact l'un de l'autre.

Un tel couplage des deux couches de sommet favorise l'obtention d'une rigidité longitudinale et d'une rigidité de cisaillement élevées. Il en découle indirectement un allègement du pneumatique qui nécessiterait plusieurs épaisseurs de bande complexe si les couches formant celles-ci n'étaient pas suffisamment couplées afin d'obtenir les rigidités longitudinale et de cisaillement souhaitées.

Selon un mode de réalisation particulièrement avantageux, les éléments de renforcement de ladite bande complexe forment un angle avec la direction circonférentielle compris entre 10 et 45°.

Comme expliqué précédemment l'angle formé par les éléments de renforcement avec la direction circonférentielle correspond à l'angle que forment les spires du tube avec la direction longitudinale du tube avant écrasement de celui-ci. Des angles réduits peuvent faciliter la réalisation de la bande complexe selon le procédé tel que décrit précédemment.

Selon une première variante de réalisation, la bande complexe est enroulée circonférentiellement avec un recouvrement axial, de préférence égal à au moins la demi largeur de ladite bande complexe. Le recouvrement axial permet d'éviter la création de zones dans lesquelles la présence d'éléments de renforcement est moins importante. Un recouvrement axial d'au moins la demi largeur de la bande complexe autorise la réalisation simultanée de quatre couches de travail dont les éléments de renforcement sont croisées d'une couche à la suivante, les angles des éléments de renforcement étant identiques en valeur absolue dans chacune des couches.

Un recouvrement axial au moins égal aux deux tiers de la largeur de la bande complexe peut permettre la réalisation simultanée d'au moins six couches de travail.

Selon une autre variante de réalisation de l'invention, la bande complexe est enroulée circonférentiellement pour former des spires juxtaposées. Une telle variante de réalisation autorise la création de deux couches de travail sans créer de surépaisseur.

Selon un premier mode de réalisation de l'invention, les éléments de renforcement de la bande complexe sont métalliques.

Avantageusement selon ce premier mode de réalisation de l'invention, les éléments de renforcement de la bande complexe sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement de la bande complexe sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de la bande complexe sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation de la bande complexe selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans la bande complexe permet notamment de réaliser simplement le tube et l'écrasement dudit tube selon le procédé décrit précédemment en limitant les risques de rupture des éléments de renforcement et améliorant l'aptitude de la bande complexe à demeurer plane après sa réalisation, notamment lorsque l'angle formé entre la direction circonférentielle et les éléments de renforcement des deux couches de sommet de travail est supérieur à 40°.

Les éléments métalliques sont préférentiellement des câbles d'acier.

Selon un deuxième mode de réalisation de l'invention, les éléments de renforcement de la bande complexe sont en matériau textile tels que des matériaux de type nylon, aramide, PET, rayonne, polycétone.

Selon un troisième mode de réalisation de l'invention, les éléments de renforcement de la bande complexe sont en matériau hybride. Il peut s'agir de matériaux hybrides textiles tels que des éléments de renforcement constitués d'aramide et de nylon tels que ceux décrits dans le document WO 02/085646 ou bien encore de matériaux hybrides combinant des matériaux textiles et des matériaux métalliques.

La réalisation de la bande complexe avec des éléments de renforcement textile ou hybride permet notamment d'apporter des avantages notamment en termes d'endurance sans trop pénaliser la masse du pneumatique, y compris en comparaison d'une seule couche additionnelle d'éléments de renforcement métalliques par exemple orientés circonférentiellement.

Selon une variante préférée de réalisation de l'invention, la bande complexe additionnelle est radialement extérieure au bord de la couche de sommet de travail radialement extérieure.

Selon d'autres variantes de réalisations, la bande complexe additionnelle peut être radialement adjacente à l'une et/ou l'autre des couches de travail ; elle peut encore selon des variantes de l'invention présentée une extrémité axialement extérieure, axialement extérieure à l'extrémité d'une ou plus plusieurs couches de travail ; elle peut encore être distante d'au moins 1.5 mm de l'extrémité d'au moins une couche de travail.

Selon un mode de réalisation préféré de l'invention, la couche de sommet de travail axialement la plus large est radialement à l'intérieur des autres couches de sommet de travail.

De préférence encore, la différence entre la largeur axiale de la couche de sommet de travail axialement la plus large et la largeur axiale de la couche de sommet de travail axialement la moins large est comprise entre 5 et 30 mm.

Selon une variante de réalisation avantageuse de l'invention, l'angle formé avec la direction circonférentielle par les éléments de renforcement des couches de sommet de travail est inférieur à 30° et de préférence inférieur à 25°.

Selon une variante de réalisation de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large. La couche de protection formée d'éléments de renforcement élastiques peut, dans le dernier cas cité ci-dessus, avoir une largeur axiale inférieure ou supérieure à la largeur axiale de la couche de sommet la plus large.

Lorsque la couche de protection est axialement plus étroite que la couche de sommet de travail axialement la moins large, que ladite couche de sommet de travail est radialement la couche de travail la plus à l'extérieur, l'invention prévoit avantageusement que le bord de la couche de protection est radialement adjacent et de préférence radialement extérieur à au moins le bord axialement intérieur de la bande complexe additionnelle.

En comparaison des variantes précédentes de l'invention, pour obtenir une telle réalisation de l'invention, selon laquelle le bord de la couche de protection est radialement adjacente et extérieure à la bande complexe additionnelle, soit l'extrémité de la couche de protection est axialement plus à l'extérieur, soit l'extrémité axialement intérieure de la couche additionnelle est axialement plus à l'intérieur. En d'autres termes, soit la couche de protection est axialement plus large, soit la bande complexe additionnelle est axialement plus large en étant allongée axialement vers l'intérieur.

Selon l'un quelconque des modes de réalisation de l'invention évoqué précédemment, l'armature de sommet peut encore être complétée, par exemple radialement entre l'armature de carcasse et la couche de travail radialement la plus à l'intérieur, par une couche de triangulation constituée d'éléments de renforcement inextensibles faisant, avec la direction circonférentielle, un angle supérieur à 40° et de préférence de même sens que celui de l'angle formé par les éléments de renforcement de la couche radialement la plus proche de l'armature de carcasse.

Un mode de réalisation avantageux de l'invention prévoit que l'armature de sommet du pneumatique comporte en outre au moins une couche continue d'éléments de renforcement circonférentiels dont la largeur axiale est de préférence inférieure à la largeur axiale de la couche de sommet de travail axialement la plus large.

La présence dans le pneumatique selon l'invention d'au moins une couche continue d'éléments de renforcement circonférentiels peut permettre de contribuer à l'obtention de rayons de courbures axiales quasi-infinis des différentes couches de renforcement dans une zone centrée sur le plan médian circonférentiel, ce qui contribue aux performances d'endurance du pneumatique.

Selon un mode de réalisation avantageux de l'invention, les éléments de renforcement d'au moins une couche continue d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 GPa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche continue d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la couche continue d'éléments de renforcement circonférentiels sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche continue d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche continue d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels d'une couche continue peuvent être formés d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible. Un tel mode de réalisation permet de conférer, de manière simple, à la couche continue d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche continue d'éléments de renforcement circonférentiels étant mesuré sur une couche vulcanisée d'éléments coupés, prélevée sur le pneumatique.

Selon un troisième mode de réalisation de l'invention, les éléments de renforcement circonférentiels d'une couche continue sont des éléments métalliques ondulés, le rapport a/λ de l'amplitude d'ondulation sur la longueur d'onde étant au plus égale à 0,09. De préférence, le module d'élasticité à la traction par unité de largeur de la couche continue d'éléments de renforcement circonférentiels est inférieur au module d'élasticité à la traction, mesuré dans les mêmes conditions, de la couche de sommet de travail la plus extensible

Les éléments métalliques de ces différents modes de réalisation sont préférentiellement des câbles d'acier.

Selon une variante de réalisation de l'invention, au moins une couche continue d'éléments de renforcement circonférentiels est disposée radialement entre deux couches de sommet de travail.

Selon cette dernière variante de réalisation, la couche continue d'éléments de renforcement circonférentiels permet de limiter de manière plus importante les mises en compression des éléments de renforcement de l'armature de carcasse qu'une couche semblable mise en place radialement à l'extérieur des autres couches de sommet de travail. Elle est préférablement radialement séparée de l'armature de carcasse par au moins une couche de travail de façon à limiter les sollicitations desdits éléments de renforcement et ne pas trop les fatiguer.

Avantageusement encore dans le cas d'une couche continue d'éléments de renforcement circonférentiels disposée radialement entre deux couches de sommet de travail, les largeurs axiales des couches de sommet de travail radialement adjacentes à la couche d'éléments de renforcement circonférentiels sont supérieures à la largeur axiale de ladite couche d'éléments de renforcement circonférentiels.

D'autres détails et caractéristiques avantageux de l'invention ressortiront ci-après de la description des exemples de réalisation de l'invention en référence aux figures 1 à 4 qui représentent :
- figure1, une vue en perspective et en écorchée d'un schéma d'une bande complexe selon l'invention,
- figure 2, une vue méridienne d'un schéma de la bande complexe de la figure 1,
- figure 3, une vue méridienne d'un schéma d'un pneumatique comportant la bande complexe de la figure 1, selon un premier mode de réalisation de l'invention,
- figure 4, une vue méridienne d'un schéma d'un pneumatique comportant la bande complexe de la figure 1, selon un deuxième mode de réalisation de l'invention.

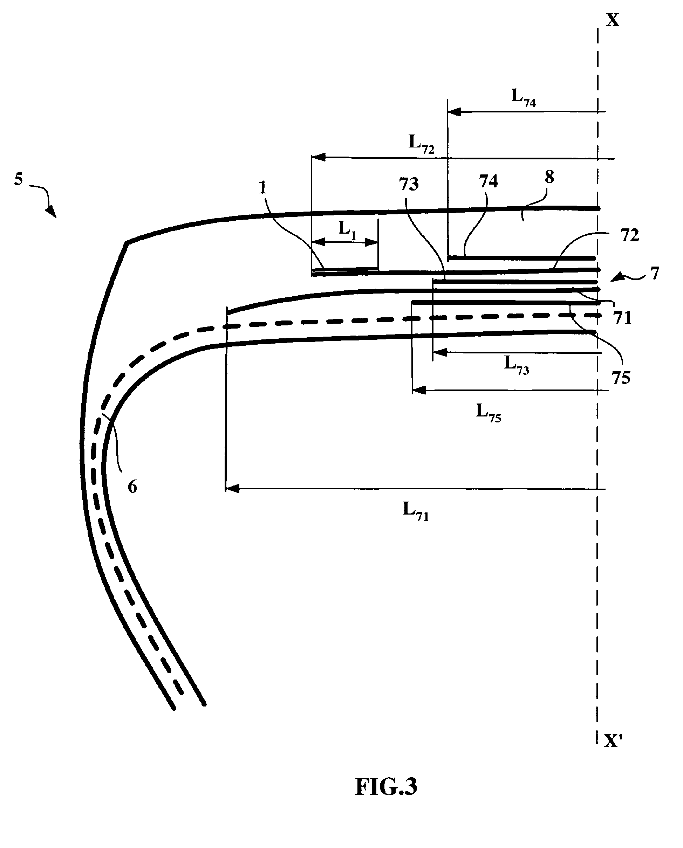

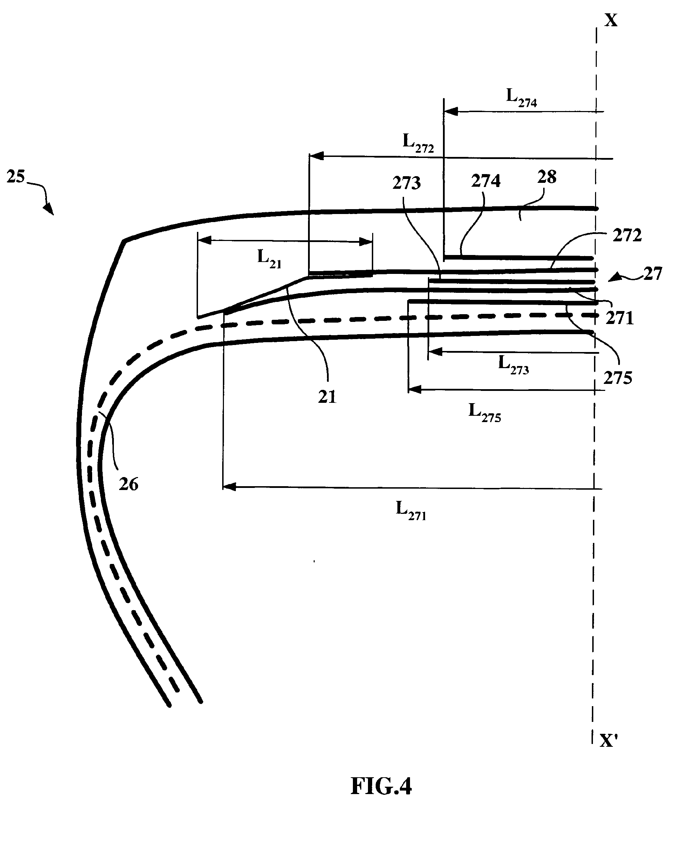

Les figures ne sont pas représentées à l'échelle pour en simplifier la compréhension. Les figures 3 et 4 ne représentent qu'une demi-vue d'un pneumatique qui se prolonge de manière symétrique par rapport à l'axe XX' qui représente le plan médian circonférentiel, ou plan équatorial, d'un pneumatique.

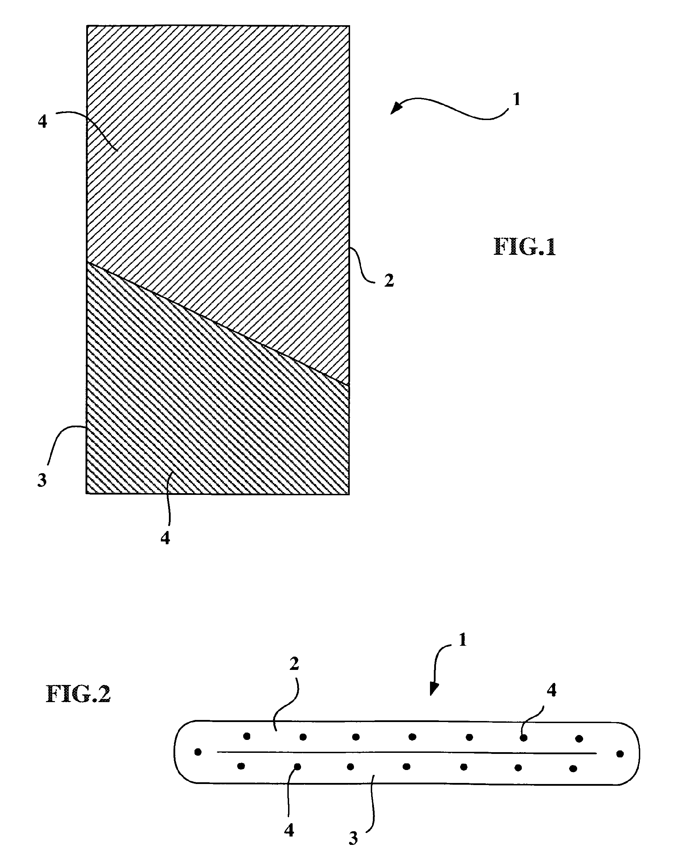

La figure 1 représente un schéma en écorché d'une bande complexe 1 constitué de deux couches 2, 3 d'éléments de renforcement 4 formant un angle avec la direction circonférentielle, parallèles dans une couche et croisés d'une couche à l'autre avec des angles par rapport à la direction circonférentielle identiques en valeur absolue.

La bande complexe 1 est obtenue selon un procédé qui consiste à écraser un tube formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. Lors de l'écrasement du tube, les spires étant parfaitement jointives, la bande complexe obtenue est constituée de deux couches d'éléments de renforcement continus passant d'une couche à l'autre.

La réalisation d'un tube avec des spires jointives permet d'obtenir des éléments de renforcement 4 linéaires dans chacune des couches, exception faite des extrémités axiales de chacune des couches, au niveau desquelles les éléments de renforcement forment des boucles pour assurer la continuité d'une couche à l'autre.

La figure 2 correspond à une vue méridienne d'une représentation schématique d'une telle bande complexe 1. Cette figure montre que la bande complexe 1 est constituée des deux couches 2, 3 d'éléments de renforcement 4 dans les quelles lesdits éléments de renforcement sont continus d'une couche à l'autre.

La bande complexe 1 ainsi représentée sur les figures présentent l'avantage de constituer un système de deux couches d'éléments de renforcement parallèles entre eux et croisés d'une ouche à la suivante, lesdites couches ne comportant pas d'extrémités d'éléments de renforcement libres.

La bande complexe 1 est réalisée à partir d'une bandelette constituée d'éléments de renforcement présentant un diamètre égal à 1.14 mm noyés entre deux calandrages d'épaisseur 0.11 mm. Chacune des couches présentent ainsi une épaisseur de 1.36 mm et la bande complexe une épaisseur de 2.72 mm, la distance radiale entre les éléments de renforcement respectifs de chacune des couches de sommet étant égale à 0.22 mm. La distance radiale entre les éléments de renforcement respectifs de chacune des couches de sommet est égale à la somme des épaisseurs du calandrage radialement à l'extérieur des éléments de renforcement de la couche radialement intérieure et du calandrage radialement à l'intérieur des éléments de renforcement de la couche radialement extérieure.

La figure 3 illustre un pneumatique 5 de dimension 295/60 R 22.5 X. Ledit pneumatique 5 comprend une armature de carcasse radiale 6 ancrée dans deux bourrelets, non représentés sur la figure. L'armature de carcasse est formée d'une seule couche de câbles métalliques. Cette armature de carcasse 6 est frettée par une armature de sommet 7, formée radialement de l'intérieur à l'extérieur :
- d'une première couche de travail 71 formée de câbles métalliques inextensibles 11.35 non frettés, continus sur toute la largeur de la nappe, orientés d'un angle égal à 18°,
- d'une couche continue 73 d'éléments de renforcement circonférentiels intercalée entre les couches de travail 71 et 72,
- d'une seconde couche de travail 72 formée de câbles métalliques inextensibles 11.35 non frettés, continus sur toute la largeur de la nappe, orientés d'un angle égal à 18° et croisés avec les câbles métalliques de la couche 71 ; la couche 72 est axialement plus petite que la couche 71,
- d'une bande complexe 1 disposée par enroulement circonférentiel. L'enroulement est effectué selon cette représentation pour obtenir des spires juxtaposées. L'enroulement de la bande complexe 1 forme ainsi deux couches radialement superposées d'éléments de renforcement parallèles entre eux dans une même couche et croisés d'une couche à la suivante sans extrémités libres. Selon d'autres variantes de réalisation de l'invention, les spires formées lors de l'enroulement de la bande complexe peuvent être axialement recouvertes, pour former un nombre de couches radialement superposées plus importantes ; elles sont par exemple axialement recouvertes au 2/3 de la largeur de la bande complexe, lors de l'enroulement, pour former six couches radialement superposées. Les éléments de renforcement de la bande complexe additionnelle sont de type PET 144x2.

La largeur axiale L₇₁ de la première couche de travail 71 est égale à 234 mm.

La largeur axiale L₇₂ de la deuxième couche de travail 72 est égale à 216 mm.

La largeur axiale L₇₃ de la couche continue 73 est égale à 196 mm, et donc inférieure aux largeurs des couches de travail 71 et 72

La bande complexe additionnelle 1 présente une largeur égale à 18 mm. Elle est radialement adjacente et extérieure à la couche de travail radialement la plus à l'extérieure 72 et s'étend axialement jusqu'à l'extrémité de ladite couche de travail 72.

L'armature de sommet est elle-même coiffée d'une bande de roulement 8.

Le pneumatique 5 comporte également une couche de protection 74 formée de câbles métalliques élastiques 18x23 dont la largeur axiale est égale à 160 mm, et une couche d'éléments de renforcement complémentaire 75, dite de triangulation, de largeur sensiblement égale à 200 mm formée de câbles métalliques inextensibles 9x28. Les éléments de renforcement de cette couche 75 forment un angle d'environ 60° avec la direction circonférentielle et sont orientés dans le même sens que les éléments de renforcement de la couche de travail 71. Cette couche 75 permet notamment de contribuer à la reprise des efforts de compression transversale dont est l'objet, l'ensemble des éléments de renforcement dans la zone du sommet du pneumatique.

La figure 4 illustre un autre mode de réalisation d'un pneumatique 51 selon l'invention qui comparée à la réalisation de la figure 3 présente une bande complexe additionnelle 21 qui s'insère entre les deux couches de travail 71, 72. La couche 21 est en effet radialement adjacente et intérieure à la couche 72.

D'autre part, le pneumatique 25 diffère encore de celui représenté sur la figure 1, en ce que la bande complexe additionnelle 21 s'étend au-delà de l'extrémité axialement extérieure de la couche 272 et vient au contact de la couche 271 pour s'étendre axialement au-delà de l'extrémité de la couche de travail 271.

La bande complexe additionnelle 21 présente une largeur L₂₁ égale à à 42 mm; elle présente une zone de recouvrement axiale avec la couche 72 égale à 18 mm et une zone de recouvrement avec la couche 71 égale à 3 mm.

L'invention ne doit pas être interprétée comme étant limitée aux variantes de réalisations décrites. D'autres variantes de réalisation de l'invention, non représentées sur les figures, concerne par exemple le cas d'une bande complexe additionnelle qui s'étend axialement au-delà de l'extrémité axialement extérieure de la couche de travail radialement extérieure et qui reste à une distance supérieure à 1.5 mm de l'extrémité de la couche de travail radialement intérieure. Selon une telle variante de réalisation, l'extrémité axialement extérieure de la bande complexe additionnelle peut se situer axialement entre les extrémités des deux couches de travail ou bien se situer au-delà de l'extrémité de la couche de travail axialement la plus large.

Des variantes de réalisation de l'invention peuvent encore prévoir par exemple que la bande complexe additionnelle peut être radialement adjacente à la couche de travail radialement intérieure de manière extérieure ou intérieure à ladite couche de travail. Selon d'autres réalisations conformes à l'invention, la bande complexe additionnelle peut être au seul contact de la couche de sommet de travail radialement extérieure ou peut encore être au seul contact de la couche de sommet de travail radialement intérieure soit en étant radialement adjacente et extérieure à l'une de ces couches de travail soit radialement adjacente et intérieure à celle-ci.

Des essais ont été réalisés avec le pneumatique réalisé selon l'invention conformément à la représentation de la figure 3 et comparés avec un pneumatique de référence identique mais réalisé selon une configuration usuelle, c'est-à-dire ne comportant pas la bande complexe additionnelle.

Les essais ont été réalisés avec des éléments de renforcement de la bande complexe additionnelle textiles de type PET 144x2.

Les premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Le véhicule de référence comportant les pneumatiques usuels est associé à une charge par pneumatique de 3600 Kg en début de roulage et évolue pour atteindre une charge de 4350 Kg en fin de roulage.

Le véhicule comportant les pneumatiques selon l'invention est associé à une charge par pneumatique de 3800 Kg en début de roulage et évolue pour atteindre une charge de 4800 Kg en fin de roulage.

Les essais sont stoppés lorsque le pneumatique est endommagé et/ou ne fonctionne plus de façon normale.

Les essais ainsi réalisés ont montré que le véhicule équipé de pneumatiques selon l'invention a parcouru une distance équivalente à la distance parcourue par les véhicules de référence. Il apparaît donc que les pneumatiques selon l'invention sont plus performants que les pneumatiques de référence puisqu'ils sont soumis à des contraintes de charge supérieure.

D'autres essais d'endurance ont été réalisés sur une machine de tests en alternant des séquences de virage à gauche, à droite puis de roulage en ligne droite dans des conditions de charge variant de 60 à 200 % de la charge nominale et de poussée variant de 0 à 0.35 fois la charge appliquée. La vitesse est comprise entre 30 et 70 km/h. Les essais sont stoppés lorsque le pneumatique est endommagé et/ou ne fonctionne plus de façon normale.

Les résultats obtenus montrent des gains en distances parcourues par les pneumatiques selon l'invention supérieurs à 54 % par rapport à la distance parcourue par les pneumatiques de référence.

## Revendications

1. Pneumatique (5) à armature de carcasse radiale (6) comprenant une armature de sommet (7) formée d'au moins deux couches (71, 72) de sommet de travail d'éléments de renforcement inextensibles, croisés d'une nappe à l'autre en faisant avec la direction circonférentielle des angles compris entre 10° et 45°, elle-même coiffée radialement d'une bande de roulement (8), ladite bande de roulement (8) étant réunie à deux bourrelets par l'intermédiaire de deux flancs, ledit pneumatique comprenant additionnellement dans chaque épaule au moins deux couches formées par enroulement circonférentiel d'une bande complexe (1) formée de deux couches (2, 3) constituées d'éléments de renforcement (4) continus passant d'une couche à l'autre, lesdits éléments de renforcement (4) étant parallèles dans une couche et croisés d'une couche à l'autre avec des angles par rapport à la direction circonférentielle identiques en valeur absolue, ladite bande complexe (1) additionnelle étant radialement adjacente au bord d'une couche (72) de sommet de travail, et l'extrémité axialement extérieure de ladite bande complexe (1) additionnelle étant située à une distance du plan équatorial du pneumatique au moins égale à la distance séparant dudit plan l'extrémité de la couche de travail à laquelle elle est adjacente **caractérisé en ce que** la distance radiale entre les éléments de renforcement (4) respectifs de chacune des couches (2, 3) de sommet formant une bande complexe (1) est inférieure à l'épaisseur d'une couche de sommet (2, 3).

2. Pneumatique (5) selon la revendication 1, **caractérisé en ce que** la distance radiale entre les éléments (4) de renforcement respectifs de chacune des couches (2, 3) de sommet formant une bande complexe (1) est inférieure à la moitié de l'épaisseur d'une couche de sommet (2, 3).

3. Pneumatique (5) selon la revendication 1 ou 2, **caractérisé en ce que** les éléments de renforcement (4) de ladite bande complexe (1) forment un angle avec la direction circonférentielle compris entre 10 et 45°.

4. Pneumatique (5) selon la revendication 1 à 3, **caractérisé en ce que** la bande complexe (1) est enroulée circonférentiellement avec un recouvrement axial, de préférence égal à au moins la demi largeur de ladite bande complexe.

5. Pneumatique (5) selon la revendication 1 à 3, **caractérisé en ce que** la bande complexe (1) est enroulée circonférentiellement pour former des spires juxtaposées.

6. Pneumatique (5) selon l'une des revendications précédentes, **caractérisé en ce que** les éléments de renforcement (4) de la bande complexe (1) sont métalliques.

7. Pneumatique (5) selon la revendication 6, **caractérisé en ce que** les éléments de renforcement (4) de la bande complexe (1) sont des éléments de renforcement métalliques présentant un module sécant à 0,7 % d'allongement compris entre 10 et 120 GPa et un module tangent maximum inférieur à 150 GPa.

8. Pneumatique (5) selon l'une des revendications 1 à 5, **caractérisé en ce que** les éléments de renforcement (4) de la bande complexe (1) sont en matériau textile.

9. Pneumatique (5) selon l'une des revendications à 5, **caractérisé en ce que** les éléments de renforcement (4) de la bande complexe (1) sont en matériau hybride.

10. Pneumatique (5) selon l'une des revendications précédentes, **caractérisé en ce que** ladite bande complexe (1) additionnelle est radialement adjacente au bord de la couche de sommet de travail radialement extérieure (72).

11. Pneumatique (5) selon la revendication 10, **caractérisé en ce que** ladite bande complexe (1) additionnelle est radialement extérieure au bord de la couche de sommet (72) de travail radialement extérieure.

12. Pneumatique (5) selon l'une des revendications précédentes, **caractérisé en ce que** la couche de sommet de travail (71) axialement la plus large est radialement à l'intérieur des autres couches de sommet de travail (72).

13. Pneumatique (5) selon l'une des revendications précédentes, **caractérisé en ce que** l'armature de sommet est complétée radialement à l'extérieur par au moins une nappe supplémentaire (74), dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

14. Pneumatique (5) selon l'une des revendications précédentes, **caractérisé en ce que** l'armature de sommet comporte une couche de triangulation (75) formée d'éléments de renforcement métalliques faisant avec la direction circonférentielle des angles supérieurs à 40°.

15. Pneumatique (5) selon l'une des revendications précédentes, **caractérisé en ce que** l'armature de sommet (7) comporte au moins une couche continue (73) d'éléments de renforcement circonférentiels.

## Claims

1. Tyre (5) with a radial carcass reinforcement (6) comprising a crown reinforcement (7) formed of at least two working crown layers (71, 72) of inextensible reinforcing elements, crossed from one ply to the other making angles of between 10° and 45° with the circumferential direction, and itself radially capped by a tread strip (8), the said tread strip (8) being connected to two beads via two sidewalls, said tyre comprising additionally, in each shoulder, at least two layers formed by circumferential winding of a complex strip (1) formed of two layers (2, 3) consisting of continuous reinforcing elements (4) passing from one layer to the other, the said reinforcing elements (4) being parallel within a layer and crossed from one layer to the other at angles with respect to the circumferential direction that are identical in terms of absolute value, the said additional complex strip (1) being radially adjacent to the edge of a working crown layer (72), and the axially outer end of the said additional complex strip (1) being situated a distance from the equatorial plane of the tyre that is at least equal to the distance separating from the said plane that end of the working layer to which it is adjacent, **characterized in that** the radial distance between the respective reinforcing elements (4) of each of the crown layers (2, 3) forming a complex strip (1) is less than the thickness of a crown layer (2, 3).

2. Tyre (5) according to Claim 1, **characterized in that** the radial distance between the respective reinforcing elements (4) of each of the crown layers (2, 3) forming a complex strip (1) is less than half the thickness of a crown layer (2, 3).

3. Tyre (5) according to Claim 1 or 2, **characterized in that** the reinforcing elements (4) of the said complex strip (1) make an angle of between 10 and 45° with the circumferential direction.

4. Tyre (5) according to Claim 1 to 3, **characterized in that** the complex strip (1) is wound circumferentially with an axial overlap, preferably equal to at least half the width of the said complex strip.

5. Tyre (5) according to Claim 1 to 3, **characterized in that** the complex strip (1) is wound circumferentially to form juxtaposed turns.

6. Tyre (5) according to one of the preceding claims, **characterized in that** the reinforcing elements (4) of the complex strip (1) are made of metal.

7. Tyre (5) according to Claim 6, **characterized in that** the reinforcing elements (4) of the complex strip (1) are metal reinforcing elements having a secant modulus at 0.7% elongation of between 10 and 120 GPa and a maximum tangent modulus of less than 150 GPa.

8. Tyre (5) according to one of Claims 1 to 5, **characterized in that** the reinforcing elements (4) of the complex strip (1) are made of a textile material.

9. Tyre (5) according to one of Claims 1 to 5, **characterized in that** the reinforcing elements (4) of the complex strip (1) are made of a hybrid material.

10. Tyre (5) according to one of the preceding claims, **characterized in that** the said additional complex strip (1) is radially adjacent to the edge of the radially outer working crown layer (72).

11. Tyre (5) according to Claim 10, **characterized in that** the said additional complex strip (1) is radially on the outside of the edge of the radially outer working crown layer (72).

12. Tyre (5) according to one of the preceding claims, **characterized in that** the axially widest working crown layer (71) is radially on the inside of the other working crown layers (72).

13. Tyre (5) according to one of the preceding claims, **characterized in that** the crown reinforcement is supplemented radially on the outside by at least one supplementary ply (74), known as a protective ply, of reinforcing elements know as elastic elements, oriented with respect to the circumferential direction at an angle of between 10° and 45° and in the same direction as the angle formed by the inextensible elements of the working ply radially adjacent to it.

14. Tyre (5) according to one of the preceding claims, **characterized in that** the crown reinforcement comprises a triangulation layer (75) formed of metal reinforcing elements that make angles in excess of 40° with the circumferential direction.

15. Tyre (5) according to one of the preceding claims, **characterized in that** the crown reinforcement (7) comprises at least one continuous layer (73) of circumferential reinforcing elements.

## Patentansprüche

1. Luftreifen (5) mit radialer Karkassenbewehrung (6), der eine Scheitelbewehrung (7) enthält, die von mindestens zwei Arbeitsscheitelschichten (71, 72) aus nicht dehnbaren Verstärkungselementen geformt wird, die sich von einer Lage zur anderen kreuzen, indem sie mit der Umfangsrichtung Winkel zwischen 10° und 45° bilden, die selbst radial von einem Laufstreifen (8) überdeckt wird, wobei der Laufstreifen (8) über zwei Flanken mit zwei Wülsten verbunden ist, wobei der Luftreifen zusätzlich in jeder Schulter mindestens zwei Schichten enthält, die durch Umfangswickeln eines komplexen Bands (1) geformt werden, das von zwei Schichten (2, 3) geformt wird die aus durchgehenden Verstärkungselementen (4) bestehen, welche von einer Schicht zur anderen gehen, wobei die Verstärkungselemente (4) in einer Schicht parallel und von einer Schicht zur anderen gekreuzt sind, mit Winkeln bezüglich der Umfangsrichtung, die im Absolutwert gleich sind, wobei das zusätzliche komplexe Band (1) dem Rand einer Arbeitsscheitelschicht (72) radial benachbart ist, und das axial äußere Ende des zusätzlichen komplexen Bands (1) sich in einem Abstand zur Äquatorialebene des Luftreifens befindet, der mindestens gleich dem Abstand ist, der von dieser Ebene das Ende der Arbeitsschicht trennt, dem es benachbart ist, **dadurch gekennzeichnet, dass** der radiale Abstand zwischen den jeweiligen Verstärkungselementen (4) jeder der ein komplexes Band (1) bildenden Scheitelschichten (2, 3) geringer als die Dicke einer Scheitelschicht (2, 3) ist.

2. Luftreifen (5) nach Anspruch 1, **dadurch gekennzeichnet, dass** der radiale Abstand zwischen den jeweiligen Verstärkungselementen (4) jeder der ein komplexes Band (1) bildenden Scheitelschichten (2, 3) geringer als die Hälfte der Dicke einer Scheitelschicht (2, 3) ist.

3. Luftreifen (5) nach Anspruch 1 oder 2, **dadurch gekennzeichnet, dass** die Verstärkungselemente (4) des komplexen Bands (1) einen Winkel mit der Umfangsrichtung bilden, der zwischen 10 und 45° liegt.

4. Luftreifen (5) nach Anspruch 1 bis 3, **dadurch gekennzeichnet, dass** das komplexe Band (1) in Umfangsrichtung mit einer axialen Überlappung gewickelt wird, die vorzugsweise gleich mindestens der halben Breite des komplexen Bands ist.

5. Luftreifen (5) nach Anspruch 1 bis 3, **dadurch gekennzeichnet, dass** das komplexe Band (1) in Umfangsrichtung gewickelt ist, um nebeneinander liegende Windungen zu formen.

6. Luftreifen (5) nach einem der vorhergehenden Ansprüche, **dadurch gekennzeichnet, dass** die Verstärkungselemente (4) des komplexen Bands (1) aus Metall sind.

7. Luftreifen (5) nach Anspruch 6, **dadurch gekennzeichnet, dass** die Verstärkungselemente (4) des komplexen Bands (1) metallische Verstärkungselemente sind, die einen Sekantenmodul bei 0,7 % Dehnung zwischen 10 und 120 GPa und einen maximalen Tangentenmodul geringer als 150 GPa aufweisen.

8. Luftreifen (5) nach einem der Ansprüche 1 bis 5, **dadurch gekennzeichnet, dass** die Verstärkungselemente (4) des komplexen Bands (1) aus textilem Material sind.

9. Luftreifen (5) nach einem der Ansprüche 1 bis 5, **dadurch gekennzeichnet, dass** die Verstärkungselemente (4) des komplexen Bands (1) aus hybridem Material sind.

10. Luftreifen (5) nach einem der vorhergehenden Ansprüche, **dadurch gekennzeichnet, dass** das zusätzliche komplexe Band (1) dem Rand der radial äußeren Arbeitsscheitelschicht (72) radial benachbart ist.

11. Luftreifen (5) nach Anspruch 10, **dadurch gekennzeichnet, dass** das zusätzliche komplexe Band (1) zum Rand der radial äußeren Arbeitsscheitelschicht (72) radial außen liegt.

12. Luftreifen (5) nach einem der vorhergehenden Ansprüche, **dadurch gekennzeichnet, dass** die axial breiteste Arbeitsscheitelschicht (71) radial innerhalb der anderen Arbeitsscheitelschichten (72) liegt.

13. Luftreifen (5) nach einem der vorhergehenden Ansprüche, **dadurch gekennzeichnet, dass** die Scheitelbewehrung radial nach außen durch mindestens eine zusätzliche, so genannte Schutzlage (74) von so genannten elastischen Verstärkungselementen vervollständigt wird, die bezüglich der Umfangsrichtung mit einem Winkel zwischen 10° und 45° und von gleicher Richtung wie der Winkel ausgerichtet sind, der von den nicht dehnbaren Elementen der Arbeitslage geformt wird, die ihr radial benachbart ist.

14. Luftreifen (5) nach einem der vorhergehenden Ansprüche, **dadurch gekennzeichnet, dass** die Scheitelbewehrung eine Triangulationsschicht (75) aufweist, die von metallischen Verstärkungselementen gebildet wird, die mit der Umfangsrichtung Winkel von mehr als 40° bilden.

15. Luftreifen (5) nach einem der vorhergehenden Ansprüche, **dadurch gekennzeichnet, dass** die Scheitelbewehrung (7) mindestens eine durchgehende Schicht (73) von Umfangsverstärkungselementen aufweist.
